# EUROPEAN PATENT APPLICATION

(11) **EP 4 336 951 A1**
(43) Date of publication of application: **13.03.2024**
(21) Application number: 22816483.6
(22) Date of filing: 02.06.2022
(51) Int. Cl.: H04W 76/15, H04L 5/00, H04W 88/08

(54) **METHOD AND DEVICE FOR CONNECTING MULTIPLE BASE STATIONS IN WIRELESS COMMUNICATION SYSTEM**

(30) Priority: 04.06.2021 KR 20210073056
(71) Applicant: Samsung Electronics Co., Ltd., Suwon-si, Gyeonggi-do 16677 (KR)
(72) Inventor: BAEK, Sangkyu, Suwon-si, Gyeonggi-do 16677 (KR); BAE, Beomsik, Suwon-si, Gyeonggi-do 16677 (KR)
(74) Representative: HGF
(86) International application number: PCT/KR2022/007861
(87) International publication number: WO 2022/255824

(57) **Abstract**

The present disclosure relates to a method performed by a user equipment (UE) connected to a base station including at least one distributed unit (DU) in a wireless communication system, the method including obtaining uplink data, and receiving downlink data from the base station or transmitting uplink data to the base station via at least one cell corresponding to the at least one DU.

## Description

### Technical Field

The present disclosure relates to a wireless communication system, and more particularly, to a method and device for connecting a plurality of base stations in a wireless communication system.

### Background Art

Efforts have been made to develop an improved 5th generation (5G) communication system or pre-5G communication system to keep up with growing wireless data traffic demand after the commercialization of 4th generation (4G) communication systems. For this reason, the 5G or pre-5G communication system is referred to as a beyond 4G network communication system or a post long-term evolution (LTE) system.

Implementation of 5G communication systems in an ultra-high frequency (millimeter-wave (mmWave)) band (such as a 60-GHz band) is under consideration to achieve high data transfer rates. To mitigate path loss of radio waves and increase transmission distance of radio waves in an ultra-high frequency band for 5G communication systems, technologies such as beamforming, massive multiple-input multiple-output (MIMO), full dimensional MIMO (FD-MIMO), array antennas, analog beamforming, and large-scale antennas have been studied.

Furthermore, to improve system networks for 5G communication systems, various technologies such as evolved small cells, advanced small cells, cloud radio access network (RAN), ultra-dense networks, device to device (D2D) communication, wireless backhaul, moving networks, cooperative communication, coordinated multi-points (CoMP), and received-interference cancellation have been developed.

In addition, for 5G systems, advanced coding modulation (ACM) schemes, such as hybrid frequency shift keying (FSK) and quadrature amplitude modulation (QAM) (FQAM) and sliding-window superposition coding (SWSC), and advanced access techniques, such as filter bank multicarrier (FBMC), non-orthogonal multiple access (NOMA), sparse code multiple access (SCMA), etc. have been developed.

Moreover, the Internet has evolved from a human-centered connection network, in which humans create and consume information, to the Internet of things (loT) network in which dispersed components such as objects exchange information with one another to process the information. Internet of Everything (IoE) technology has emerged, in which the loT technology is combined with, for example, technology for processing big data through connection with a cloud server. To implement the loT, technologies such as a sensing technology, a wired/wireless communication and network infrastructure, a service interface technology, and a security technology are required, and thus, research has recently been conducted into technologies such as sensor networks for interconnecting objects, machine to machine (M2M) communication, and machine type communication (MTC). In an loT environment, intelligent Internet technology services may be provided to create new values for human life by collecting and analyzing data obtained from interconnected objects. The loT may be applied to various fields such as smart homes, smart buildings, smart cities, smart cars or connected cars, a smart grid, healthcare, smart home appliances, advanced medical services, etc., through convergence and integration between existing information technology (IT) and various industries.

Thus, various attempts are being made to apply a 5G communication system to the loT network. For example, technologies such as sensor networks, M2M communication, MTC, etc., are implemented using 5G communication techniques such as beamforming, MIMO, array antennas, etc. The application of a cloud RAN as the above-described big data processing technology may be an example of convergence between the 5G and loT technologies.

In addition, direct communication (sidelink communication) between terminals (or user equipments (UEs)) using a 5G communication system has been studied, and the sidelink communication is expected to provide users with various services by being applied, for example, to vehicle-to-everything (V2X).

As various services may be provided as a result of the advancements in mobile communication systems, in particular, a method of connecting a plurality of base stations is required.

### Disclosure

### Technical Problem

The present disclosure provides a method and a device for connecting a plurality of base stations in a wireless communication system.

### Technical Solution

According to an embodiment of the present disclosure, there may be provided a method, performed by a user equipment (UE) connected to a base station including at least one distributed unit (DU), of communicating with the base station in a wireless communication system, the method including obtaining uplink data, and receiving downlink data from the base station or transmitting uplink data to the base station via at least one cell corresponding to the at least one DU.

According to an embodiment of the present disclosure, there may be provided a UE communicating with a base station including at least one DU in a wireless communication system, the UE including a transceiver and a UE controller coupled to the transceiver. The UE controller may be configured to obtain uplink data, and via the transceiver, receive downlink data from the base station or transmit the uplink data to the base station by using at least one cell corresponding to the at least one DU included in the base station.

According to an embodiment of the present disclosure, there may be provided a method, performed by a base station including at least one distributed unit (DU), of communicating with a UE connected thereto in a wireless communication system, the method including obtaining downlink data, and receiving uplink data from the UE or transmitting the downlink data to the UE via at least one cell corresponding to the at least one DU.

### Advantageous Effects

The disclosed embodiments provide a device and method capable of effectively providing services in a wireless communication system.

### Description of Drawings

FIG. 1 is a diagram illustrating a base station connection method according to an embodiment of the present disclosure.
FIG. 2 is a diagram illustrating a method of connecting a user equipment (UE) to a plurality of cells, according to an embodiment of the present disclosure.
FIG. 3 is a diagram illustrating an intra-cell group split bearer according to an embodiment of the present disclosure.
FIG. 4 is a diagram illustrating a method of transmitting a buffer status report (BSR), according to an embodiment of the present disclosure.
FIG. 5 is a diagram illustrating a method of transmitting a BSR, according to an embodiment of the present disclosure.
FIG. 6 is a diagram illustrating a method of transmitting a Configured Grant Confirmation (CGC) message, according to an embodiment of the present disclosure.
FIG. 7 is a diagram illustrating a method of transmitting a medium access control (MAC) control element (CE) for each subcell group, according to an embodiment of the present disclosure.
FIG. 8 is a diagram illustrating a method of transmitting a MAC CE for each subcell group, according to an embodiment of the present disclosure.
FIG. 9 is a diagram illustrating a distributed unit (DU) recovery scheme according to an embodiment of the present disclosure.
FIG. 10 is a diagram illustrating a method of connecting a UE to a plurality of cells, according to an embodiment of the present disclosure.
FIG. 11 is a diagram illustrating a method of connecting a UE to a plurality of cells, according to an embodiment of the present disclosure.
FIG. 12 is a diagram illustrating a method of splitting a radio link control acknowledged mode (RLC AM) entity for a base station, according to an embodiment of the present disclosure.
FIG. 13 is a diagram illustrating a configuration of a radio bearer according to an embodiment of the present disclosure.
FIG. 14 illustrates a configuration of a radio bearer according to an embodiment of the present disclosure.
FIG. 15 illustrates a configuration of a radio bearer according to an embodiment of the present disclosure.
FIG. 16 is a diagram illustrating a method of configuring secondary node (SN) radio resource control (RRC), according to an embodiment of the present disclosure.
FIG. 17 is a diagram illustrating a method of configuring SN RRC, according to an embodiment of the present disclosure.
FIG. 18 is a diagram illustrating a method of transmitting downlink RLC data and a status report message, according to an embodiment of the present disclosure.
FIG. 19 is a diagram illustrating a method of transmitting uplink RLC data, according to an embodiment of the present disclosure.
FIG. 20 is a diagram illustrating a method of transmitting uplink RLC data, according to an embodiment of the present disclosure.
FIG. 21 illustrates a structure of a base station according to an embodiment of the present disclosure.
FIG. 22 illustrates a structure of a UE according to an embodiment of the present disclosure.

### Mode for Invention

In the following description of the present disclosure, when it is determined that detailed descriptions of related known functions or configurations may unnecessarily obscure the subject matter of the present disclosure, the descriptions thereof will be omitted. Furthermore, the terms to be described later are defined by taking functions described in the present disclosure into account and may be changed according to a user's or operator's intent or customs. Therefore, definition of the terms should be made based on the overall descriptions in the present specification.

For the same reason, in the accompanying drawings, some components are exaggerated, omitted, or schematically illustrated. Furthermore, the size of each element does not entirely reflect an actual size thereof. In the drawings, like reference numerals refer to the same or corresponding elements throughout.

Advantages and features of the present disclosure and methods of accomplishing the same will be more readily appreciated by referring to the following description of embodiments and the accompanying drawings. However, the present disclosure is not limited to embodiments set forth below but may be embodied in many different forms; rather, the present embodiments are provided so that the present disclosure will be thorough and complete and will fully convey the scope of the present disclosure to those of ordinary skill in the art, and the present disclosure is only defined by the appended claims.

It will be understood that each block of a flowchart in the drawings and combinations of blocks of the flowchart may be performed by computer program instructions. These computer program instructions may be loaded into a processor of a general-purpose computer, a special-purpose computer, or other programmable data processing equipment, and thus, the instructions performed via the processor of the computer or other programmable data processing equipment generate a means for performing functions specified in the flowchart block(s). The computer program instructions may also be stored in a computer-executable or computer-readable memory capable of directing a computer or other programmable data processing equipment to implement functions in a specific manner, and thus, the instructions stored in the computer-executable or computer-readable memory may produce an article of manufacture including instruction means for performing the functions described in the flowchart block(s). The computer program instructions may also be loaded into a computer or other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a portion of a module, segment, or code that includes one or more executable instructions for executing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto.

As used herein, the term 'unit' denotes a software element or a hardware element such as a field-programmable gate array (FPGA) or an application-specific integrated circuit (ASIC), and performs certain functions. However, the term 'unit' is not limited to software or hardware. The 'unit' may be configured to be in an addressable storage medium or configured to operate one or more processors. Thus, the term 'unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by the elements and 'units' may be combined into a smaller number of elements and 'units', or may be further divided into additional elements and 'units'. Furthermore, the elements and 'units' may be embodied to reproduce one or more central processing units (CPUs) in a device or security multimedia card. In addition, in an embodiment, the 'unit' may include one or more processors.

As used in the following description, terms identifying access nodes, terms indicating network entities, terms indicating messages, terms indicating interfaces between network entities, terms indicating various types of identification information, etc. are exemplified for convenience of description. Accordingly, the present disclosure is not limited to terms to be described later, and other terms representing objects having the equivalent technical meaning may be used.

Hereinafter, for convenience of descriptions, the present disclosure uses terms and names defined in the 3^{rd} Generation Partnership Project Long-Term Evolution (3GPP LTE) specifications. However, the present disclosure is not limited to the terms and names but may also be identically applied to systems that comply with other standards. For example, in the present disclosure, an evolved Node B (eNB) may be used interchangeably with a next-generation Node B (gNB) for convenience of description. In other words, a base station described as an eNB may represent a gNB.

Hereinafter, a base station is an entity that allocates resources to a terminal, and may be at least one of a gNB, an eNB, a Node B, a BS, a radio access unit, a base station controller, or a network node. A terminal may include a user equipment (UE), a mobile station (MS), a cellular phone, a smart phone, a computer, or a multimedia system capable of performing a communication function. However, the base station and the terminal are not limited to the above examples.

Furthermore, although embodiments of the present disclosure are hereinafter described with respect to an LTE, LTE-Advanced (LTE-A), LTE Pro, or 5th generation (5G) (or new radio (NR) or next-generation mobile communication) system, the embodiments of the present disclosure may be applied to other communication systems having similar technical backgrounds and channel configurations. It will also be understood by those skilled in the art that embodiments of the present disclosure are applicable to other communication systems through some modification within a range that does not greatly depart from the scope of the present disclosure.

A communication method of a UE connected to a plurality of base stations, according to an embodiment of the present disclosure, may include obtaining data to be transmitted to a base station, and transmitting the obtained data via the connected plurality of base stations.

Hereinafter, embodiments of the present disclosure will be described in detail with reference to the accompanying drawings.

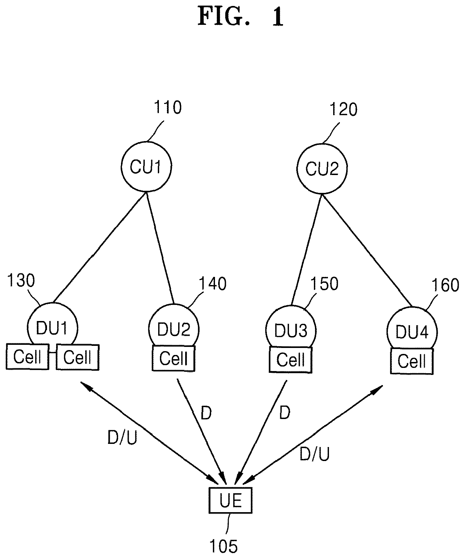

FIG. 1 is a diagram illustrating a base station connection method according to an embodiment of the present disclosure.

Referring to FIG. 1, in a mobile communication system to which the present disclosure may be applied, functions of a base station may be implemented in a distributed manner. The base station may be composed of central units (CUs) 110 and 120 in which upper layer functions are implemented and distributed units (DUs) 130, 140, 150, and 160 in which lower layer functions are implemented. However, a configuration of the base station is not limited to the above example and may include other units.

Based on a layer structure defined by the 3GPP, functions of radio resource control (RRC), service data adaptation protocol (SDAP), and packet data convergence protocol (PDCP) layers may be implemented in a CU, and functions of radio link control (RLC), medium access control (MAC), and physical (PHY) layers may be implemented in a DU.

According to an embodiment of the present disclosure, because functions closely related to wireless transmission is implemented in a DU, the DU may be installed close to where an actual antenna is located. Therefore, depending on coverage of a DU base station, multiple DUs may be placed at different locations, and each DU may have one or more cells.

According to an embodiment of the present disclosure, when a given DU has a certain cell, it may be understood that the given DU is connected to, associated with, or corresponds to the certain cell. However, it is not limited to the above example.

The UE 105 may be connected to a plurality of cells by using a carrier aggregation (CA) technology, and the plurality of cells connected to the UE may be cells belonging to different DUs. In addition, in a dual connectivity or multi-connectivity architecture, some of the plurality of cells to which the UE is connected may be designated as a cell group. According to an embodiment of the present disclosure, some of the plurality of cells to which the UE is connected may be designated as a subcell group (SubCell Group). A cell configured for a specific DU may be configured in a cell group or subcell group.

According to an embodiment of the present disclosure, a cell to which the UE is connected may be a downlink ('D') cell capable of operating in downlink only, or may be a bidirectional ('D/U') cell capable of operating in downlink and uplink ('U'). In addition, the cell to which the UE is connected may be an uplink cell capable of operating in uplink only. If the UE receives a downlink transmission, an uplink cell is required to transmit acknowledgement (ACK)/negative ACK (NACK) feedback for the received downlink transmission. Because ACK/NACK can be transmitted on a physical channel called a physical uplink control channel (PUCCH) in the PHY layer, ACK/NACK transmission may also be referred to as PUCCH transmission.

An uplink cell is required to allow the UE to perform PUCCH transmission that occurs for a downlink cell, and for this purpose, each downlink cell may have a PUCCH uplink cell available. The PUCCH uplink cell may be referred to as a PUCCH cell, and the PUCCH cell may be one of a primary cell (PCell), a primary secondary cell (PSCell), or a PUCCH secondary cell (PUCCH SCell).

According to the embodiment of FIG. 1, the UE 105 may be connected to a plurality of cells of four DUs 130, 140, 150, and 160. Among these, DU1 and DU4 may each have one uplink cell. The uplink cell that DU1 and DU4 each have may be a PUCCH cell. However, the uplink cell is not limited to the above example, and may be a cell that performs transmission via a physical channel called a physical uplink shared channel (PUSCH). That is, the uplink cell may include a PUCCH cell and a PUSCH cell.

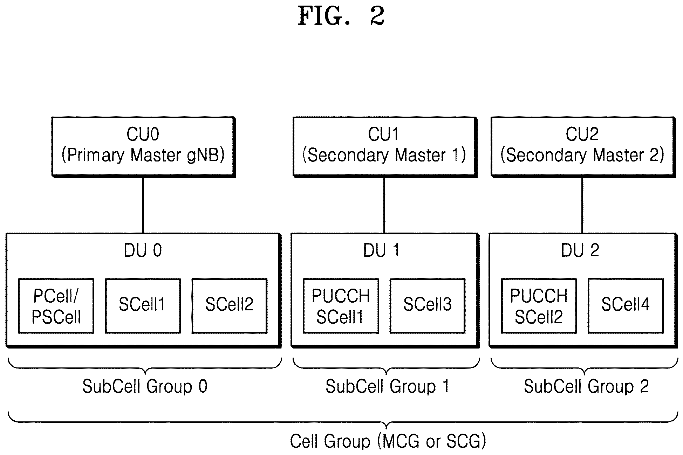

FIG. 2 is a diagram illustrating a method of connecting a UE to a plurality of cells, according to an embodiment of the present disclosure.

Referring to FIG. 2, it is assumed that the UE is connected to three cells (PCell or PSCell, SCell 1, and SCell 2) for DU 0, two cells (PUCCH SCell 1 and SCell3) for DU 1, and two cells (PUCCH SCell 2 and SCell 4) for DU 2. The UE may be connected to a plurality of cells by using a CA technology, which can achieve effects such as improved throughput and enhanced reliability. In the embodiment of FIG. 2, cells connected to each DU form a subcell group. Because cells connected to one DU have similar link conditions such as line of sight (LoS) conditions, received signal strength, etc., it may be useful to create an integrated configuration per subcell group. In addition, if uplink data and medium access control (MAC) control element (CE) transmission is performed on a per-subcell group basis, independent scheduling may be performed for each DU within a cell group. In the embodiment of FIG. 2, it is assumed that three subcell groups (SubCell Group 0, SubCell Group 1, and SubCell Group 2) form a cell group, and the cell group may be a master cell group (MCG) or a secondary cell group (SCG). Each DU may have RLC, MAC, and PHY layers, and have a corresponding CU. In the embodiment of FIG. 2, it is assumed that CU 0 is connected to DU 0, CU 1 is connected to DU 1, and CU 2 is connected to DU 2. The plurality of CUs may be divided into CU 0, which is a primary master base station (Primary Master gNB) for managing an RRC connection with the UE, and other secondary master base stations (Secondary Master gNBs). A base station may configure the UE with configuration information for a subcell group via an RRC Reconfiguration message.

The UE may not exactly know a CU/DU split architecture of the base station, but is able to know its connected cell, subcell group, and cell group. In the embodiment of FIG. 2, it is assumed that each DU is connected to a different CU, but a plurality of DUs may be connected to one CU, and an interconnection structure of CUs and DUs may vary depending on an embodiment. Although FIG. 2 illustrates the embodiment in which a DU has one subcell group, in actual operation, cells of one DU may be operated as multiple subcell groups.

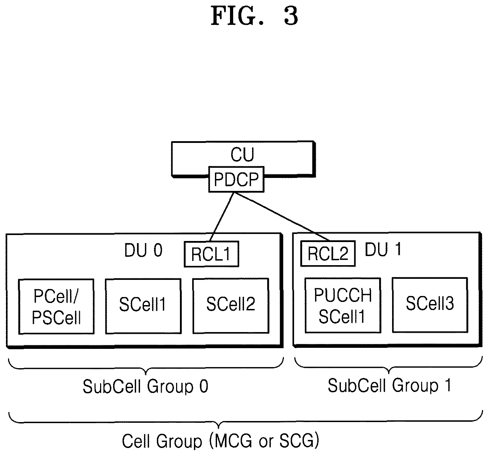

FIG. 3 is a diagram illustrating an intra-cell group split bearer according to an embodiment of the present disclosure.

Referring to FIG. 3, it is assumed that a UE is connected to three cells (PCell or PSCell, SCell 1, and SCell 2) for DU 0 and two cells (PUCCH SCell 1 and SCell3) for DU 1. The UE may be connected to a plurality of cells by using a CA technology, which can achieve effects such as improved throughput and enhanced reliability.

In the embodiment of FIG. 3, cells connected to each DU form a subcell group. Because cells connected to one DU have similar link conditions such as LoS conditions, received signal strength, etc., it may be useful to create an integrated configuration per subcell group. In addition, if uplink data and MAC CE transmission is performed on a per-subcell group basis, independent scheduling may be performed for each DU within a cell group.

In the embodiment of FIG. 3, it is assumed that two subcell groups (SubCell Group 0 and SubCell Group 1) form a cell group, and the cell group may be an MCG or an SCG. Each DU may have RLC, MAC, and PHY layers, and have a corresponding CU.

An RLC layer is responsible for segmentation, reassembly, and automatic repeat request (ARQ) retransmission of packets, and an RLC entity configured for a certain radio bearer (RB) is located in a DU. Because data transmitted by a base station or a UE must pass through at least one RLC entity, when connecting multiple DUs as shown in the embodiment of FIG. 3, RLC entities need to reside in all the DUs in order to fully utilize the capacity of these DUs. In the embodiment of FIG. 3, one RB may have a PDCP entity located in a CU, and this PDCP entity may correspond to both RLC 1 in DU 0 and RLC 2 in DU 1. The base station may transmit data to be transmitted to DU 0 to RLC 1 that is the RLC entity in DU 0, and data to be transmitted to DU 1 to RLC 2 that is the RLC entity in DU 1, so that they may transmit the data to the UE. In the embodiment of FIG. 3, because cells of DU 0 and cells of DU 1 belong to different subcell groups but are all configured in the same cell group, this RB structure may be referred to as an intra-cell group split bearer.

In an intra-cell group split bearer structure, the UE needs to perform split bearer transmission by using two RLCs when transmitting data to the base station in the uplink. The base station may configure the UE to perform transmission by using an uplink split bearer via an RRC Reconfiguration message, and the configured UE may transmit data from a PDCP layer to two RLCs by using the intra-cell group split bearer. For the intra-cell group split bearer, a threshold may be configured, and if a data volume representing the amount of data to be transmitted by the UE is greater than or equal to the threshold, the UE may transmit the data by using all configured RLC entities. If the data volume representing the amount of data to be transmitted by the UE is less than the threshold, the UE may transmit the data by using a primary RLC entity. However, the criteria are not limited to the above example, and the UE may determine whether to use all the RLC entities or only the primary RLC entity based on criteria other than the threshold.

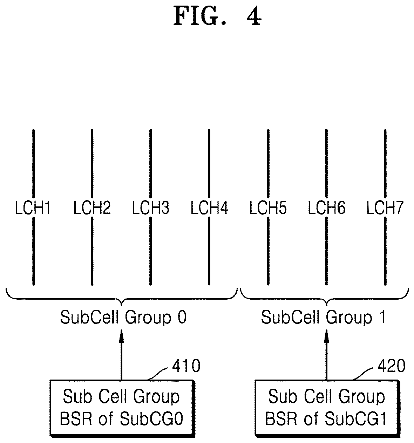

FIG. 4 is a diagram illustrating a method of transmitting a buffer status report (BSR), according to an embodiment of the present disclosure.

Referring to FIG. 4, because each of the subcell groups described with reference to FIGS. 2 and 3 may have a different RLC entity, a subcell group via which data for a logical channel (or LCH) corresponding to an RLC entity should be transmitted may be different. Because each subcell group can independently allocate uplink radio resources (uplink grant), the UE needs to transmit, to each subcell group, a BSR for data to be transmitted via the corresponding subcell group. In the embodiment of FIG. 4, it is assumed that the UE is configured with seven logical channels LCH 1, LCH 2, LCH 3, LCH 4, LCH 5, LCH 6, and LCH 7, the logical channels LCH 1, LCH 2, LCH 3, and LCH 4 of the UE may transmit data by using cells of Subcell Group 0, and the logical channels LCH 5, LCH 6, and LCH 7 of the UE may transmit data by using cells of SubCell Group 1.

According to an embodiment of the present disclosure, each subcell group may need to receive a BSR indicating the amount of data to be transmitted via the corresponding subcell group. To do so, a BSR triggering procedure may be performed for each logical channel that can use a corresponding subcell group. For example, in the case of a regular BSR, it may be triggered upon arrival of data for a logical channel with a higher priority than previously buffered data for logical channels which can use a subcell group. Alternatively, the regular BSR may be triggered when there is no data available for a logical channel that can use a subcell group. A periodic BSR transmission may also be triggered for each subcell group. For this purpose, periodicBSR-Timer and retxBSR-Timer may be operated for each subcell group. In addition, values for the periodicBSR-Timer and retxBSR-Timer to be applied may also be configured per subcell group. In the embodiment of FIG. 4, the logical channels LCH 1, LCH 2, LCH 3, and LCH 4 which can use SubCell Group 0 are used for triggering a BSR of SubCell Group 0, and the logical channels LCH 5, LCH 6, and LCH 7 which can use SubCell Group 1 are used for triggering a BSR of SubCell Group 1. According to an embodiment, a buffer status value included in each of the BSRs 410 and 420 transmitted to a corresponding subcell group may include a result of calculation using the amount of data for a logical channel that can use the subcell group.

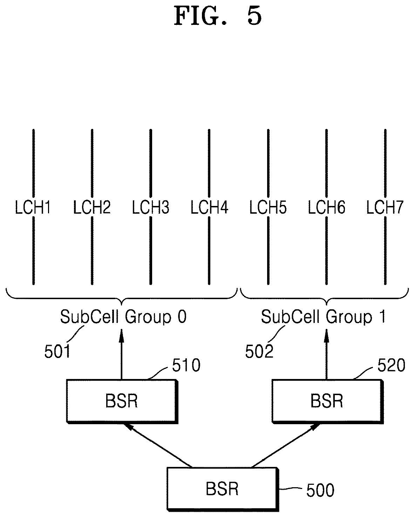

FIG. 5 is a diagram illustrating a method of transmitting a BSR, according to an embodiment of the present disclosure.

Referring to FIG. 5, because each of the subcell groups described with reference to FIG. 2 has a different RLC entity, a subcell group via which data for a logical channel (or LCH) corresponding to an RLC entity is to be transmitted may be different. Because each subcell group can independently allocate uplink radio resources (uplink grant), the UE needs to transmit BSRs to all subcell groups. In the embodiment of FIG. 5, it is assumed that the UE is configured with seven logical channels LCH 1, LCH 2, LCH 3, LCH 4, LCH 5, LCH 6, and LCH 7, the logical channels LCH 1, LCH 2, LCH 3, and LCH 4 of the UE may transmit data by using cells of Subcell Group 0, and the logical channels LCH 5, LCH 6, and LCH 7 of the UE may transmit data by using cells of SubCell Group 1. In this case, each of the subcell groups may need to receive a BSR indicating the amount of data to be transmitted via the corresponding subcell group. To this end, when a BSR 500 is triggered and transmitted, the UE may duplicate the triggered BSR 500 and transmit the duplicated BSRs 510 and 520 respectively to the configured subcell groups. Then, all the configured subcell groups may each receive the BSR, calculate the amount of uplink radio resources required for each subcell group, and allocate actual resources therefor. That is, BSR for all logical channels may be duplicated and transmitted to all the subcell groups, or BSR for a logical channel corresponding to each subcell group may be transmitted to the corresponding subcell group.

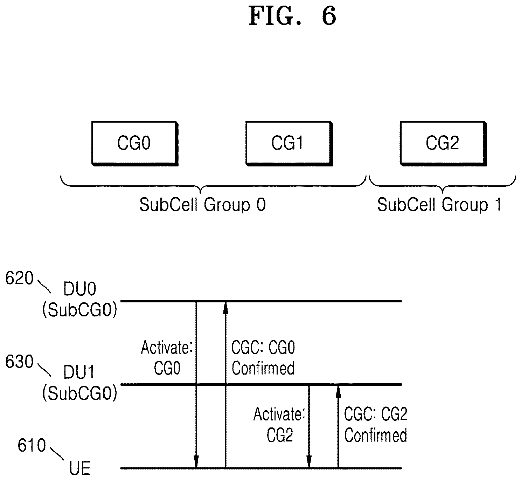

FIG. 6 is a diagram illustrating a method of transmitting a Configured Grant Confirmation (CGC) message, according to an embodiment of the present disclosure.

Referring to FIG. 6, a configured grant (CG) may be configured for a UE to be periodically assigned transmission resources for uplink transmissions to a base station. A CG may be configured in each bandwidth part (BWP), and CG resources may be used simultaneously upon activation of a CG but may not be used upon deactivation thereof. A message indicating activation or deactivation of a CG may be transmitted in the form of a downlink control information (DCI) message transmitted on a physical downlink control channel (PDCCH). Also, the message indicating the activation or deactivation of the CG may be scrambled by configured scheduling-radio network temporary identifier (CS-RNTI) and transmitted.

According to an embodiment of the present disclosure, when a subcell group is configured, a DU corresponding to the subcell group may be different from a DU corresponding to another subcell group, and thus a CG may also correspond to a specific subcell group. Therefore, upon receiving the message indicating the activation or deactivation of the CG, the UE may need to transmit a CGC message to a subcell group corresponding to the CG. To this end, a MAC entity of the UE that has received the message indicating the activation or deactivation of the CG may transmit the CGC message by using uplink radio resources of a cell belonging to a subcell group corresponding to the CG whose activation or deactivated is indicated.

According to the embodiment of FIG. 6, CG0 and CG1 may correspond to SubCell Group 0 belonging to DU0 620, and CG2 may correspond to SubCell Group 1 belonging to DU1 630. Therefore, activation or deactivation of CG0 and CG1 may be indicated by the Subcell Group 0, and a corresponding CGC message may also be transmitted using uplink radio resources of a cell belonging to the SubCell Group 0. Thus, when the CGC message is transmitted to the DU0 620, the DU0 620 may determine that the UE has successfully received the indication of activation or deactivation of the corresponding CG. On the other hand, activation or deactivation of CG2 may be indicated by the SubCell Group 1, and a corresponding CGC message may also be transmitted using uplink radio resources of a cell belonging to the SubCell Group 1. Thus, when the CGC message is transmitted to the DU1 630, the DU1 630 may determine that the UE has successfully received the indication of activation or deactivation of the corresponding CG.

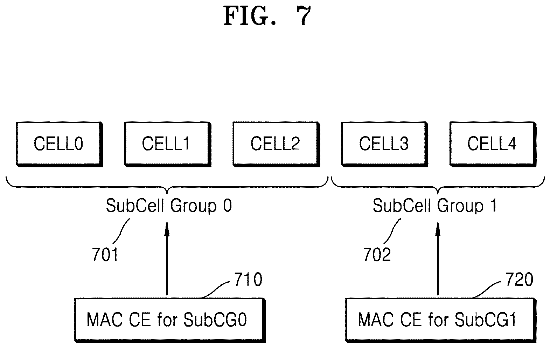

FIG. 7 is a diagram illustrating a method of transmitting a MAC CE for each subcell group, according to an embodiment of the present disclosure.

Referring to FIG. 7, a UE may be connected to one or more subcell groups, and each subcell group may have one or more configured cells. In the embodiment of FIG. 7, it is assumed that the UE is connected to two subcell groups that are SubCell Group 0 701 and SubCell Group 1 702. It is also assumed that the SubCell Group 0 701 has three connected cells, i.e., cell 0, cell 1, and cell 2, and the Subcell Group 1 702 has two connected cells, i.e., cell 3 and cell 4. Because each subcell group has similar link conditions such as LoS conditions and received signal strength, etc., if MAC CE transmission is performed on a per-subcell group basis, independent scheduling may be performed for each DU within each subcell group. To achieve this, triggering and transmission of a MAC CE may be performed per subcell group, and information included in the MAC CE may also be different for each subcell group.

FIG. 7 shows the embodiment in which a MAC CE 710 to be transmitted to SubCell Group 0 (SubCG0) and a MAC CE 720 to be transmitted to SubCell Group 1 (SubCG1) are generated independently. Furthermore, a MAC CE to be transmitted to a specific subcell group may be transmitted to the subcell group by using uplink radio resources (uplink grant) of a cell belonging to the subcell group. In this way, a base station (e.g., a DU) corresponding to the specific subcell group may receive the MAC CE that it needs and use the MAC CE for radio resource scheduling. A MAC CE that may be transmitted per subcell group may be at least one of BSR, CGC, or power headroom report (PHR).

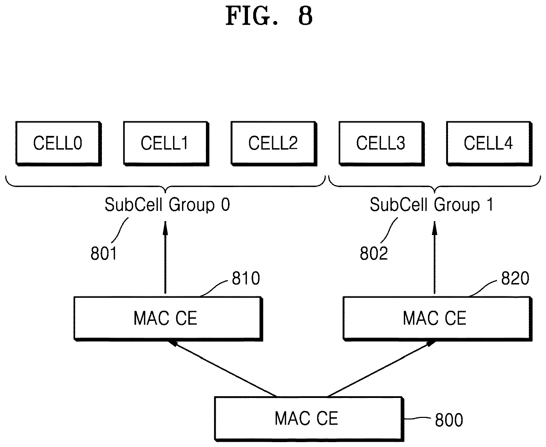

FIG. 8 is a diagram illustrating a method of transmitting a MAC CE for each subcell group, according to an embodiment of the present disclosure.

Referring to FIG. 8, a UE may be connected to one or more subcell groups, and each subcell group may have one or more configured cells. In the embodiment of FIG. 8, it is assumed that the UE is connected to two subcell groups that are SubCell Group 0 801 and SubCell Group 1 802. It is also assumed that the SubCell Group 0 801 has three connected cells, i.e., cell 0, cell 1, and cell 2, and the Subcell Group 1 802 has two connected cells, i.e., cell 3 and cell 4. Because each subcell group has similar link conditions such as LoS conditions and received signal strength, etc., if MAC CE transmission is performed per subcell group, independent scheduling may be performed for each DU within each subcell group. To this end, when a MAC CE is triggered, the same MAC CE may be duplicated and transmitted to all configured subcell groups. In this case, MAC CE triggering may be performed in the same manner and information included in the MAC CE may be the same across all the subcell groups.

FIG. 8 shows an embodiment in which, in order to transmit MAC CEs to two subcell groups configured when a specific MAC CE 100 is generated, a method of duplicating a MAC CE 810 to be transmitted to the SubCell Group 0 (SubCG0) and a MAC CE 820 to be transmitted to SubCell Group 1 (SubCG1) and transmitting them respectively to the corresponding subcell groups is used. Furthermore, a MAC CE to be transmitted to a specific subcell group may be transmitted to the subcell group on uplink radio resources (uplink grant) of a cell belonging to the subcell group. In this way, a base station (e.g., a DU) corresponding to the specific subcell group may receive the MAC CE that it needs and use the MAC CE for radio resource scheduling. A MAC CE that may be duplicated and transmitted per subcell group in this way may be at least one of BSR, CGC, or PHR. That is, the same MAC CE may be transmitted to all subcell groups, or a MAC CE corresponding to each subcell group may be transmitted to the corresponding subcell group.

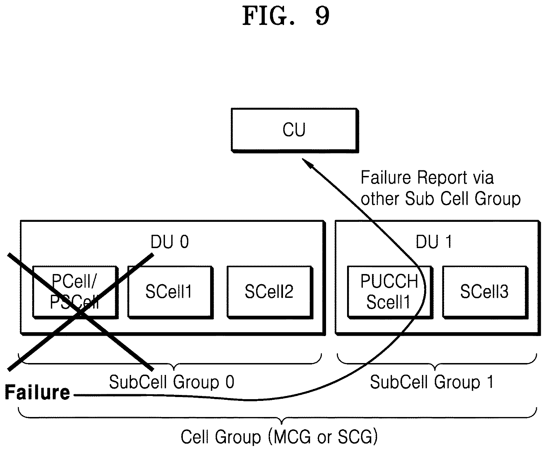

FIG. 9 is a diagram illustrating a DU recovery scheme according to an embodiment of the present disclosure.

Referring to FIG. 9, it is assumed that a UE is connected to three cells (PCell or PSCell, SCell 1, and SCell 2) for DU 0 and two cells (PUCCH SCell 1 and SCell3) for DU 1. The UE can be connected to a plurality of cells by using a CA technology, which can achieve effects such as improved throughput and enhanced reliability.

In the embodiment of FIG. 9, cells connected to each DU form a subcell group. Because cells connected to one DU have similar link conditions such as LoS conditions, received signal strength, etc., it may be useful to create an integrated configuration per subcell group. In addition, if uplink data and MAC CE transmission is performed on a per-subcell group basis, independent scheduling may be performed for each DU within a cell group.

In the embodiment of FIG. 9, it is assumed that two subcell groups (SubCell Group 0 and SubCell Group 1) form a cell group, and the cell group may be an MCG or an SCG. Each DU may have RLC, MAC, and PHY layers, and have a corresponding CU.

Each subcell group may have one or more cells, and a radio link failure (RLF) may occur in these cells. An RLF may occur on a per-subcell group basis or on a per-cell basis, and when a per-subcell group or per-cell RLF occurs, the UE may report such occurrence to the base station by using a Failure Information message, etc. As such a Failure Information message, at least one of MCG Failure Information, SCG Failure Information, or RLC Failure Information message may be used. At this time, if the UE is connected to a plurality of subcell groups, it is undesirable to transmit such a Failure Information message via a subcell group where the RLF occurred because the transmission may be affected by the occurrence of RLF. Therefore, if a Failure Information message is transmitted due to occurrence of an RLF, the Failure information message may be transmitted using a cell in another subcell group where the RLF did not occur. The embodiment of FIG. 9 illustrates, when an RLF (failure) occurred in a PCell or PSCell for DU0, a method of transmitting a Failure Information message via SubCell Group 1 that is not SubCell Group 0 that is the subcell group to which the PCell or PSCell belongs.

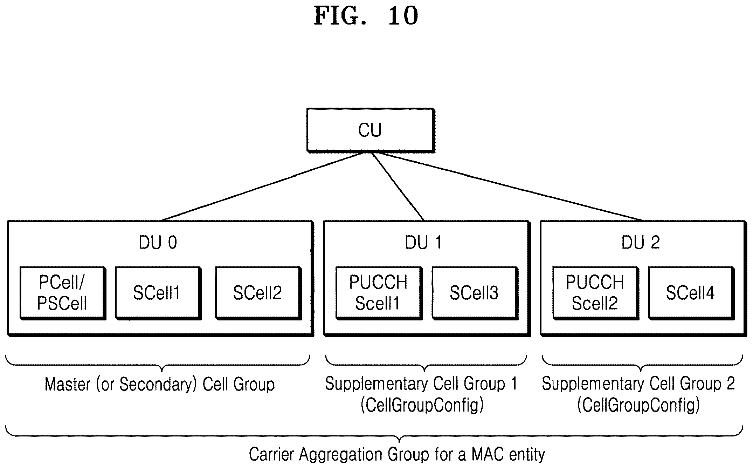

FIG. 10 is a diagram illustrating a method of connecting a UE to a plurality of cells, according to an embodiment of the present disclosure.

Referring to FIG. 10, it is assumed that a UE is connected to three cells (PCell or PSCell, SCell 1, and SCell 2) for DU 0, two cells (PUCCH SCell 1 and SCell3) for DU 1, and two cells (PUCCH SCell 2 and SCell 4) for DU 2. The UE can be connected to a plurality of cells by using a CA technology, which can achieve effects such as improved throughput and enhanced reliability. In the embodiment of FIG. 10, cells connected to each DU form a cell group. Because cells connected to one DU have similar link conditions such as LoS conditions, received signal strength, etc., it may be useful to perform independent scheduling with an independent configuration as a cell group. On the other hand, it may be necessary to have a connected plurality of cell groups correspond to a single MAC entity so that operations performed for each MAC entity may not be unnecessarily repeated.

FIG. 10 illustrates an embodiment in which a system includes one MCG or SCG and two supplementary cell groups. Each cell group may have independent cell group configuration information (CeIlGroupConfig), and a plurality of cell groups may be referred to as a carrier aggregation cell group or the like. The plurality of cell groups may correspond to one MAC entity and perform operations of the MAC entity. MAC entity-level operations may include transmissions of MAC CEs such as a BSR and CGC. Each DU may have a corresponding CU. In the embodiment of FIG. 10, it is assumed that a total of three DUs are connected to one CU, but a CU to which each DU is connected does not need to be the same. When the UE is connected to three or more cell groups in this way, this may be referred to as multi-connectivity.

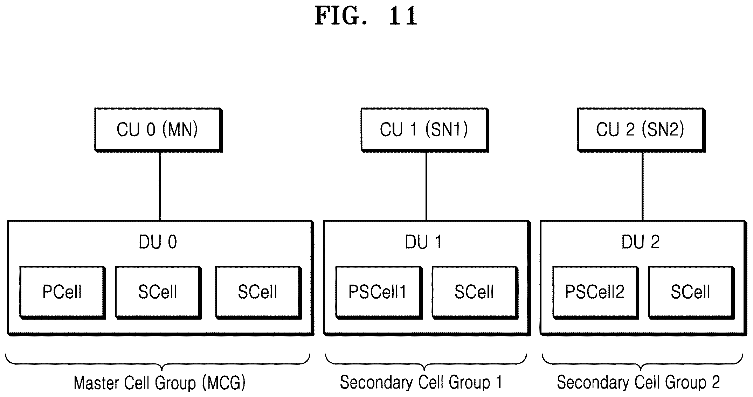

FIG. 11 is a diagram illustrating a method of connecting a UE to a plurality of cells, according to an embodiment of the present disclosure.

Referring to FIG. 11, it is assumed that the UE is connected to three cells (PCell or PSCell, SCell 1, and SCell 2) for DU 0, two cells (PUCCH SCell 1 and SCell3) for DU 1, and two cells (PUCCH SCell 2 and SCell 4) for DU 2. The UE can be connected to a plurality of cells by using a CA technology, which can achieve effects such as improved throughput and enhanced reliability. In the embodiment of FIG. 10, cells connected to each DU form a cell group. Because cells connected to one DU have similar link conditions such as LoS conditions, received signal strength, etc., it may be useful to perform independent scheduling with an independent configuration as a cell group. On the other hand, it may be necessary to have a connected plurality of cell groups correspond to a single MAC entity so that operations performed for each MAC entity may not be unnecessarily repeated.

FIG. 11 illustrates an embodiment in which the system includes one MCG and two SCGs. Each cell group may have independent cell group configuration information (CellGroupConfig) and correspond to one MAC entity to perform operations of the MAC entity. MAC entity-level operations may include transmissions of MAC CEs such as a BSR and CGC. Each DU may have a corresponding CU. In the embodiment of FIG. 11, it is assumed that a total of three DUs are respectively connected to different CUs, but CUs to which two or more DUs are connected may be the same. When the UE is connected to three or more cell groups in this way, this may be referred to as multi-connectivity.

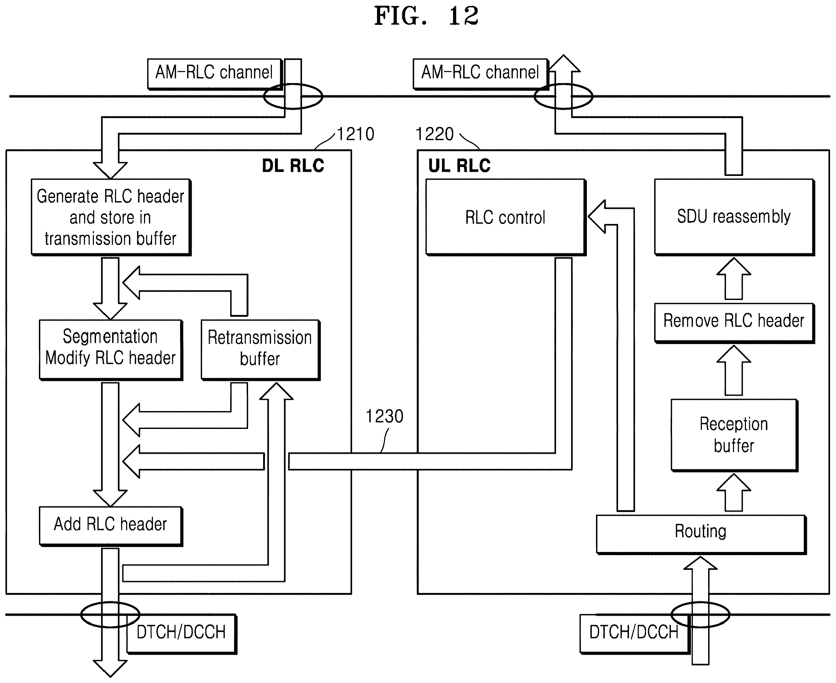

FIG. 12 is a diagram illustrating a method of splitting an RLC acknowledged mode (AM) entity for a base station, according to an embodiment of the present disclosure.

Referring to FIG. 12, an RLC AM mode is an RLC mode that supports retransmission by ARQ, and RLC entities may be respectively configured at a base station and a UE. Because an RLC AM entity of the UE is configured and exists in one UE, there is no need for separate entities in downlink and uplink, but in the case of a base station, a downlink RLC AM entity 1210 and an uplink RLC AM entity 1220 may be located separately because a DU that processes downlink transmission may be different from a DU that processes uplink reception.

The downlink RLC AM entity 1210 may have the following blocks.
- A block that generates an RLC header and stores it in a transmission buffer (Generate RLC header and store in transmission buffer)
- A block that performs segmentation and modifies an RLC header (Segmentation, Modify RLC header)
- A retransmission buffer block for retransmission (Retransmission buffer)
- A block that adds an RLC header (Add RLC header)

The uplink RLC AM entity
1220 may have the following blocks.
- A block that controls RLC transmission (RLC control)
- A service data unit (SDU) reassembly block (SDU reassembly)
- A block that removes an RLC header (Remove RLC header)
- A reception buffer block for reassembly (Reception buffer)
- A routing block that transmits received data (Routing)

The uplink RLC AM entity 1220 may receive uplink data from the UE and simultaneously receive therefrom a status report message (a status report or status protocol data unit (PDU)) regarding downlink data. The status report message regarding downlink data needs to be transmitted to the downlink RLC AM entity 1210 because it is feedback information on downlink transmission. To this end, the status report message may be transmitted from the uplink RLC AM entity 1220 to the downlink RLC AM entity 1210 (1230). Based on this message, the downlink RLC AM entity 1210 may perform retransmission or empty the retransmission buffer.

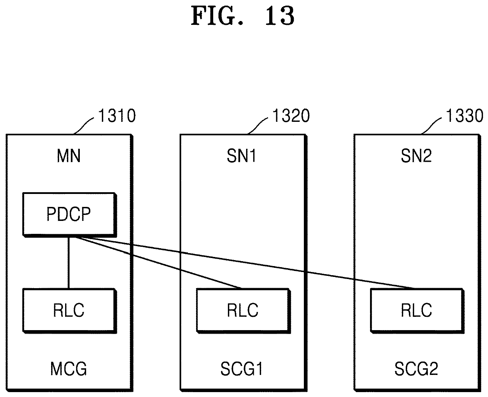

FIG. 13 is a diagram illustrating a configuration of an RB according to an embodiment of the present disclosure.

Referring to FIG. 13, a UE may be connected to three or more base station entities, and the base station entities may each correspond to a cell group. This cell group may be an MCG or an
SCG, and each cell group may have separate cell group configuration information (CellGroupConfig). From a base station perspective, each cell group may correspond to a node, and a node corresponding to an MCG may be referred to as a master node (MN), and a node corresponding to an SCG may be referred to as a secondary node (SN).

In the embodiment of FIG. 13, it is assumed that the UE is connected to one MN 1310 and two SNs (SN1 1320 and SN2 1330), but there is no limit to the number of connected nodes (or cell groups). When the UE is connected to three or more cell groups, a split bearer in which each cell group has an RLC entity may be considered. In detail, one data RB (DRB) or signaling RB(SRB) may correspond to one PDCP entity, and the PDCP entity may be associated with three or more RLC entities.

FIG. 13 shows an embodiment in which one RLC entity is configured for each cell group and corresponds to one PDCP entity. This allows transmission over this RB in all cell groups, thereby increasing data rates. This method of transmitting different packets by using three or more RLC entities may be referred to as a multi-RLC split bearer.

During downlink transmission, the base station may decide, based on frequency congestion, link conditions, base station policy, etc., whether to perform transmission using a multi-RLC split bearer or which RLC entity (or which cell group) is used for transmission. However, for the UE, it may not always be necessary to use all configured RLC entities especially when low-speed transmission is required. On the other hand, three or more RLC entities may be used only when high-speed transmission is required. For this purpose, the UE or base station may use a threshold-based split bearer transmission method.

Specifically, if the amount of data held by the PDCP entity is greater than or equal to a preset threshold, the UE or base station may transmit data using all configured RLC entities (in this case, data transmitted via each RLC entity is different). On the other hand, if the amount of data held by the PDCP entity is less than the preset threshold, the UE or base station may transmit data only via a primary RLC entity (a primary logical channel) among the configured RLC entities.

Furthermore, according to an embodiment of the present disclosure, the base station may also configure an RLC entity to be used for uplink transmission among a plurality of configured RLC entities. If the amount of data held by the PDCP entity is greater than or equal to a preset threshold, the base station or UE may transmit data using all RLC entities configured to be used for uplink transmission (in this case, data transmitted via each RLC entity is different). On the other hand, if the amount of data held by the PDCP entity is less than the preset threshold, the base station or UE may transmit data only via a primary RLC entity (primary logical channel) among the configured RLC entities.

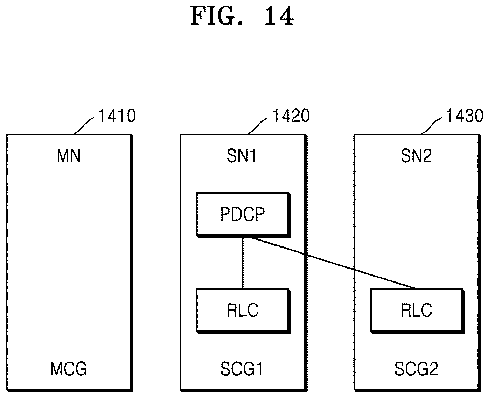

FIG. 14 illustrates a configuration of an RB according to an embodiment of the present disclosure.

Referring to FIG. 14, a UE may be connected to three or more base station entities, and the base station entities may each correspond to a cell group. This cell group may be an MCG or an
SCG, and each cell group may have separate cell group configuration information (CellGroupConfig). From a base station perspective, each cell group may correspond to a node, and a node corresponding to an MCG may be referred to as an MN, and a node corresponding to an SCG may be referred to as an SN.

In the embodiment of FIG. 14, it is assumed that the UE is connected to one MN 1410 and two SNs (SN1 1420 and SN2 1430), but there is no limit to the number of connected nodes (or cell groups). When the UE is connected to three or more cell groups, a split bearer in which some of the cell groups have RLC entities may be considered. In detail, one DRB or SRB may correspond to one PDCP entity, and RLC entities associated with the PDCP entity may be configured for two or more cell groups.

FIG. 14 shows an embodiment in which one RLC entity is configured in each of the two SCGs SCG1 and SCG2 and corresponds to the PDCP entity. This allows transmission over this RB in two SCGs, thereby increasing data rates. However, because no RLC entity is not configured in an MCG, transmission is not performed via the MCG. That is, in the embodiment of FIG. 14, when the capacity of cells of the MCG is insufficient, the MCG may be configured so that transmission via the MCG is not performed.

In the embodiment of FIG. 14, the PDCP entity is configured in SN1, so the MN is independent of a data flow on this RB. In this case, a method by which the PDCP entity is configured in the SN (SN1), and all configured RLC bearers transmit different packets by using RLC entities located in the SCGs may be referred to an SN (SN1)-terminated SCG split bearer.

During downlink transmission, the base station may decide, based on frequency congestion, link conditions, base station policy, etc., whether to perform transmission using an SCG split bearer or which RLC entity (or which cell group) is used for transmission. However, for the UE, it may not always be necessary to use all configured RLC entities especially when low-speed transmission is required. On the other hand, two or more RLC entities may be used only when high-speed transmission is required. For this purpose, the UE or base station may use a threshold-based split bearer transmission method.

Specifically, if the amount of data held by the PDCP entity is greater than or equal to a preset threshold, the UE or base station may transmit data using all configured RLC entities (in this case, data transmitted via each RLC entity is different). On the other hand, if the amount of data held by the PDCP entity is less than the preset threshold, the UE or base station may transmit data only via a primary RLC entity (a primary logical channel) among the configured RLC entities.

Furthermore, according to an embodiment of the present disclosure, the base station may also configure an RLC entity to be used for uplink transmission among the configured multiple RLC entities. In this case, if the amount of data held by the PDCP entity is greater than or equal to a preset threshold, the base station or UE may transmit data using all RLC entities configured to be used for uplink transmission (in this case, data transmitted via each RLC entity is different). On the other hand, if the amount of data held by the PDCP entity is less than the preset threshold, the UE or base station may transmit data only via a primary RLC entity (a primary logical channel) among the configured RLC entities.

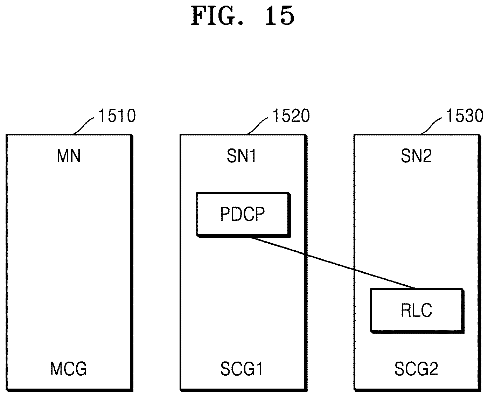

FIG. 15 illustrates a configuration of an RB according to an embodiment of the present disclosure.

Referring to FIG. 15, a UE may be connected to three or more base station entities, and the base station entities may each correspond to a cell group. This cell group may be an MCG or an SCG, and each cell group may have separate cell group configuration information (CeIIGroupConfig). From a base station perspective, each cell group may correspond to a node, and a node corresponding to an MCG may be referred to as an MN, and a node corresponding to an SCG may be referred to as an SN.

In the embodiment of FIG. 15, it is assumed that the UE is connected to one MN 1510 and two SNs (SN1 1520 and SN2 1530), but there is no limit to the number of connected nodes (or cell groups). When the UE is connected to three or more cell groups, an RB with an RLC entity in one of the cell groups may be considered. In detail, one DRB or SRB may correspond to one PDCP entity, and RLC entities associated with an RLC entity associated with the PDCP entity may be configured in one cell group. According to an embodiment of the present disclosure, a node (cell group) where the PDCP entity is configured may not be the same as a cell group (node) where the RLC entity is configured.

In the embodiment of FIG. 15, the PDCP entity is configured in a node SN1 (SCG1), and the RLC entity is configured in a node SN2 (SCG 2). This enables data generated in SN1 1520 to be transmitted via SCG2 (SN2 1530), thereby increasing transmission efficiency. However, because an RLC entity is not configured for MCG and SCG1, transmission is not performed via the MCG and SCG1. That is, when the capacity of cells of the MCG and SCG1 is insufficient, the MCG and SCG1 may be configured so that transmission via the MCG and SCG1 is not performed. In this case, a bearer for which all PDCP entities are configured in SN1 and an RLC bearer is configured for SCG2 may be referred to as an SN1-terminated SCG (SCG2) bearer.

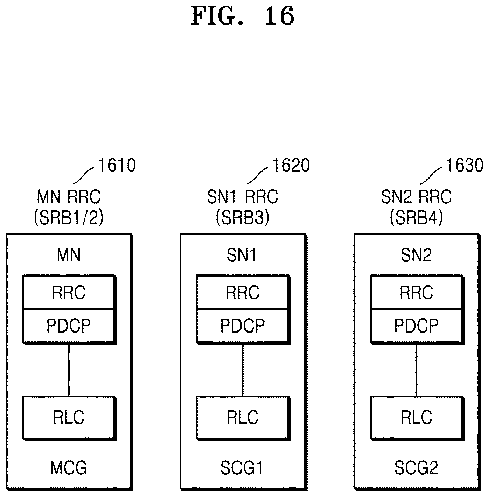

FIG. 16 is a diagram illustrating a method of configuring SN RRC, according to an embodiment of the present disclosure.

Referring to FIG. 16, a UE may be connected to a plurality of nodes with a plurality of connected cell groups. A node connected to the UE may be an MN or SN. Each of the connected nodes may transmit and receive a separate RRC message to and from the UE. For this purpose, a SRB for separate RRC transmission may be configured.

SRB type 1 (SRB1) where RRC messages are transmitted, and SRB type 2 (SRB2) where non-access stratum (NAS) messages are transmitted are configured as SRBs for the existing MN, and SRB type 3 (SRB3) that is a SRB for a separate SN may be configured. However, when two or more SNs are configured, separate SRBs SRBn (n=3, 4,...), may be configured. That is, when a k-th SN is configured, SRB(k+2) is configured so that each SN may transmit a separate RRC message.

FIG. 16 shows that SN1 configures and uses SRB3, and SN2 configures and uses SRB4. As shown in FIG. 16, each SN has a separate RRC entity, and the RRC entity may correspond to a PDCP entity. The PDCP entity may correspond to one or more RLC entities, and the RLC entities are not necessarily located in a cell group corresponding to the node. In this way, each base station may transmit a downlink RRC message to the UE by using each SRB, and the UE may transmit an uplink RRC message to the base station by using each SRB. Referring to FIG. 16, a type of SRB is configured for each SN, and the detailed name of the SRB may be different. For example, SRB3-1 may be used as RRC of SN1, SRB3-2 may be used as RRC of SN2, etc.

If a SRBn is not configured in an SN, for transmission via the SRBn, the SN may request transmission of RRC configuration from the MN or an SN in which the SRBn is configured. To achieve this, an SN in which SRBn is not configured may generate an RRC reconfiguration message and transmit the corresponding RRC reconfiguration message to the MN or an SN in which the SRBn is configured, and then the MN or SN in which the SRBn is configured may transmit the RRC reconfiguration message to the UE by using the configured SRBn.

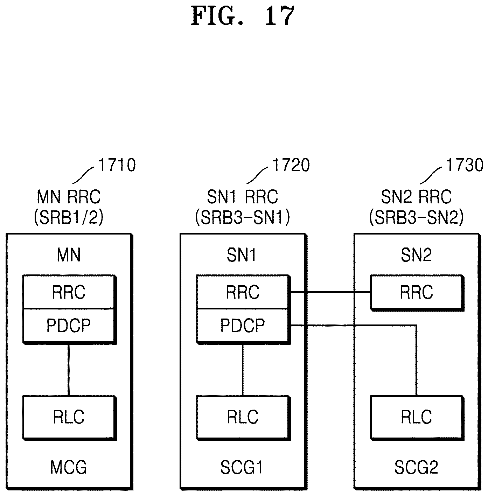

FIG. 17 is a diagram illustrating a method of configuring SN RRC, according to an embodiment of the present disclosure.

Referring to FIG. 17, a UE may be connected to a plurality of nodes with a plurality of connected cell groups. A node connected to the UE may be an MN or SN. Each of the connected nodes may transmit and receive a separate RRC message to and from the UE. For this purpose, a SRB for separate RRC transmission may be configured.

SRB1 where RRC messages are transmitted and SRB2 where non-access stratum (NAS) messages are transmitted are configured as SRBs for the existing MN, and SRB3 that is a SRB for a separate SN may be additionally configured. However, when two or more SNs are configured, the separately configured SNs may share SRB3. That is, when the SRB3 is configured, each SN may generate a separate RRC reconfiguration message and transmit it to the UE. To achieve this, SRB3 may have one PDCP entity, but SN1 and SN2 may have separate RRC entities and be responsible for generating and managing RRC messages. However, the transmission of this RRC message is managed by one SN, and the SN responsible therefor may be an SN with a PDCP entity located therein. The PDCP entity may correspond to one or more RLC entities, and the RLC entities are not necessarily located in a cell group corresponding to the node. In the embodiment of FIG. 17, it is shown that SRB3 has two RLC entities. In this way, each base station may transmit a downlink RRC message to the UE by using each SRB, and the UE may transmit an uplink RRC message to the base station by using each SRB.

Furthermore, according to an embodiment, an RRC reconfiguration message for the SN2 is generated by an RRC entity of the SN2 and transmitted to the SN1, and then transmitted by the SN1 via the PDCP entity. A SRB used in this case may be SRB3. If the UE has transmitted an RRC message to the base station via SRB3 and this RRC message is an RRC message to be transmitted to the SN2, the SN1 may transmit the RRC message to the SN2.

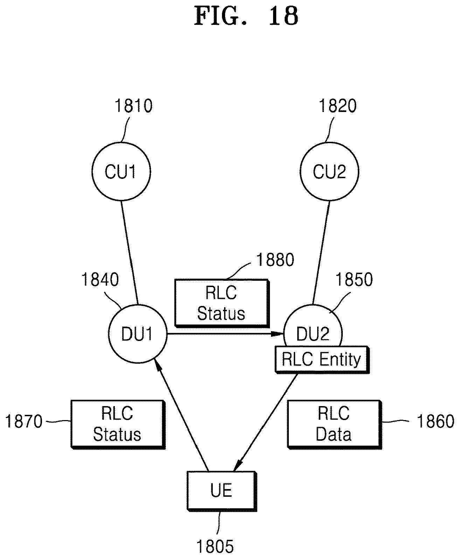

FIG. 18 is a diagram illustrating a method of transmitting downlink RLC data and a status report message, according to an embodiment of the present disclosure.

Referring to FIG. 18, a UE 1805 may be connected to a plurality of DUs 1840 and 1850 which may respectively have CUs 1810 and 1820 connected thereto. Because an RLC entity handled by the UE is located in a specific DU, if an RLC status report message (a status report or status PDU) arrives at a DU where the corresponding RLC entity is not located, the RLC status report message needs to be transmitted to the DU where the RLC entity is located.

The embodiment of FIG. 18 shows an example in which an RLC entity is located in the DU2 1850. The DU2 1850 may transmit RLC data 1860 to the UE via the RLC entity. If the DU2 1850 does not have an uplink cell, or if the DU2 1850 has an uplink cell but the UE transmits, to a cell of the DU1 1840, a status report message 1870 corresponding to the RLC entity located in the DU2 1850, the DU1 1840 may forward the received status report message 1870 to the DU2 1850 (1880). The forwarding 1880 may be performed via an Xn interface or an inter-DU interface. When the DU2 1850 receives the RLC status report message, it may determine, based on this message, whether the RLC entity will perform retransmission.

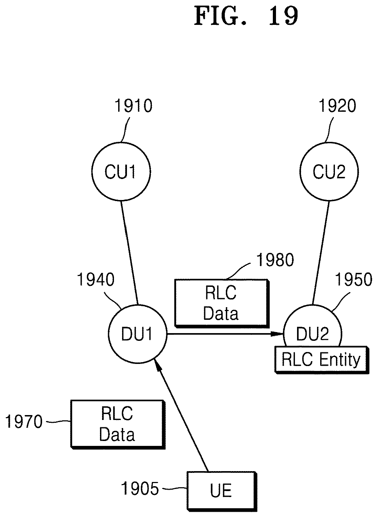

FIG. 19 is a diagram illustrating a method of transmitting uplink RLC data, according to an embodiment of the present disclosure.

Referring to FIG. 19, a UE 1905 may be connected to a plurality of DUs 1940 and 1950 which may respectively have CUs 1910 and 1920 connected thereto. Because an RLC entity handled by the UE 1905 is located in a specific DU (e.g., the DU2 1950), if an RLC data PDU arrives at a DU (e.g., the DU1 1940) where the corresponding RLC entity is not located, the RLC data PDU needs to be transmitted to the DU where the RLC entity is located.

The embodiment of FIG. 19 shows an example in which an RLC entity is located in the DU2 1950. If the DU2 1950 does not have an uplink cell, or if the DU2 1950 has an uplink cell but the UE 1905 transmits, to a cell of the DU1 1940, a RLC data PDU 1970 corresponding to the RLC entity located in the DU2 1950, the DU1 1940 may forward the received RLC data PDU 1970 to the DU2 1950 (1980). The forwarding 1980 may be performed via an Xn interface or an inter-DU interface. When the DU2 1950 receives the RLC data PDU, it may deliver a part of data in the RLC data PDU to PDCP that is an upper layer, update receive state variables, or transmit an RLC status report message to the UE.

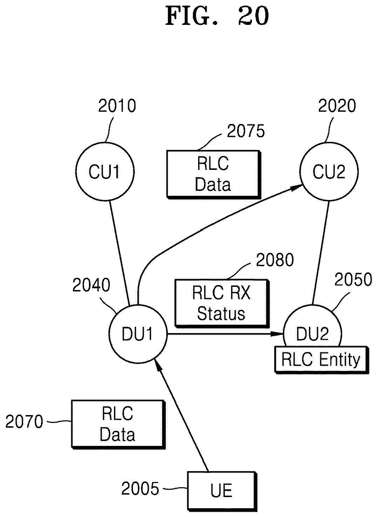

FIG. 20 is a diagram illustrating a method of transmitting uplink RLC data, according to an embodiment of the present disclosure.

Referring to FIG. 20, a UE 2005 may be connected to a plurality of DUs 2040 and 2050 which may respectively have CUs 2010 and 2020 connected thereto. Because an RLC entity handled by the UE 2005 is located in a specific DU (e.g., the DU2 2050), if an RLC data PDU arrives at a DU (e.g., the DU1 2040) where the corresponding RLC entity is not located, a reception status of the RLC data PDU needs to be transmitted to the DU where the RLC entity is located. However, the received data may be transmitted to a CU to which a PDCP entity belongs without having to be transmitted to the DU where the RLC entity is located.

The embodiment of FIG. 20 shows an example in which an RLC entity is located in the DU2 2050. If the DU2 2050 does not have an uplink cell, or if the DU2 2050 has an uplink cell but the UE 2005 transmits, to a cell of the DU1 2040, an RLC data PDU 2070 corresponding to the RLC entity located in DU2 2050, the DU1 2040 may transmit the received RLC data PDU 2070 to the CU2 2020 which has a PDCP entity corresponding to the RLC entity located in the DU2 2050 (2075). Also, in order to inform the RLC entity in the DU2 2050 that the corresponding RLC data PDU has been successfully received, the DU1 2040 may forward RLC reception status information (RLC Rx Status) to the DU2 2050 (2080). To inform which RLC data PDU it has received, the DU1 2040 may transmit, to the RLC entity (the DU2 2050), the RLC Rx Status including a sequence number value of the received RLC data PDU or bits corresponding to the sequence number. The forwarding 2080 may be performed via an Xn interface or an inter-DU interface. When the DU2 2050 receives RLC reception status information, it may update RLC receive state variables or transmit an RLC status report message to the UE.

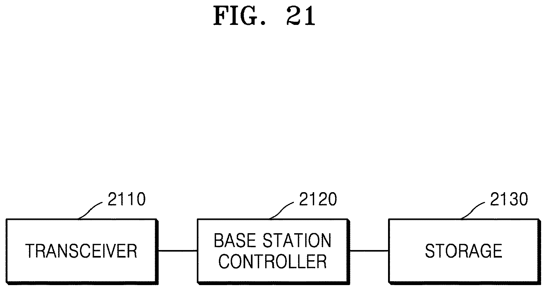

FIG. 21 illustrates a structure of a base station according to an embodiment of the present disclosure.

Referring to FIG. 21, the base station may include a transceiver 2110, a base station controller 2120, and a storage 2130. The transceiver 2110, the base station controller 2120, and the storage 2130 may operate according to the above-described communication method of the base station. In addition, a CU, a DU, and a node may also each correspond to the structure of the base station. However, the components of the base station are not limited to the above example. For example, the base station may include more or fewer components than those described above. Furthermore, the transceiver 2110, the base station controller 2120, and the storage 2130 may be implemented as a single chip.

The transceiver 2110 collectively refers to a receiver of the base station and a transmitter of the base station, and may transmit and receive signals to and from a UE, other base stations, or other network entities. In this case, the transmitted and received signals may include control information and data. For example, the transceiver 2110 may transmit, to the UE, system information as well as a synchronization signal or a reference signal. For this purpose, the transceiver 2110 may include an RF transmitter for up-converting and amplifying a frequency of a signal to be transmitted and an RF receiver for low-noise amplifying a received signal and down-converting its frequency. However, this is merely an embodiment of the transceiver 2110, and the components of the transceiver 2110 are not limited to the RF transmitter and the RF receiver. The transceiver 2110 may include a wired or wireless transceiver and include various components for transmitting and receiving signals. Furthermore, the transceiver 2110 may receive a signal via a communication channel (e.g., a radio channel) and output the signal to the base station controller 2120, and transmit a signal output from the base station controller 2120 via a communication channel. In addition, the transceiver 2110 may receive a communication signal and output it to a processor, and transmit a signal output from the processor to the UE, another base station, or another entity over a wired or wireless network.

The storage 2130 may store programs and data necessary for operations of the base station. Also, the storage 1230 may store control information or data included in a signal obtained by the base station. The storage 2130 may be composed of storage media, such as read-only memory (ROM), random access memory (RAM), hard discs, compact disc (CD)-ROM, and digital versatile discs (DVDs), or a combination thereof. The storage 2130 may also store at least one of information transmitted and received via the transceiver 2110 and information generated via the base station controller 2120.

In the present disclosure, the base station controller 2120 may be defined as a circuit or an application-specific integrated circuit, or at least one processor. The processor may include a communication processor (CP) for performing control for communication and an application processor (AP) for controlling upper layers such as application programs. The base station controller 2120 may control all operations of the base station according to an embodiment proposed in the present disclosure. For example, the base station controller 2120 may control a flow of signals between blocks so that the base station performs operations according to the above-described flowcharts.

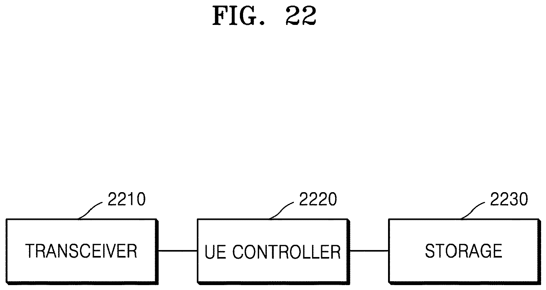

FIG. 22 illustrates a structure of a UE according to an embodiment of the present disclosure.

Referring to FIG. 22, the UE may include a transceiver 2210, a UE controller2220, and a storage 2230. The transceiver 2210, the UE controller 2220, and the storage 2230 may operate according to the above-described communication method of the UE. However, the components of the UE are not limited to the above example. For example, the UE may include more or fewer components than those described above. Furthermore, the transceiver 2210, the base station controller 2220, and the storage 2230 may be implemented as a single chip.

The transceiver 2210 collectively refers to a receiver of the UE and a transmitter of the UE, and may transmit and receive signals to and from a base station, another UE, or another network entity. The transmitted and received signals may include control information and data. For example, the transceiver 2210 may receive, from the base station, system information as well as a synchronization signal or a reference signal. For this purpose, the transceiver 2210 may include an RF transmitter for up-converting and amplifying a frequency of a signal to be transmitted and an RF receiver for low-noise amplifying a received signal and down-converting its frequency. However, this is merely an embodiment of the transceiver 2210, and the components of the transceiver 2210 are not limited to the RF transmitter and the RF receiver. Furthermore, the transceiver 2210 may include a wired or wireless transceiver and include various components for transmitting and receiving signals. Furthermore, the transceiver 2210 may receive a signal via a radio channel and output the signal to the UE controller 2220, and transmit a signal output from the UE controller 2220 via a radio channel. In addition, the transceiver 2210 may receive a communication signal and output it to a processor, and transmit a signal output from the processor to a network entity over a wired or wireless network.

The storage 2230 may store programs and data necessary for operations of the UE. Also, the storage 2230 may store control information or data included in a signal obtained by the UE. The storage 2230 may be composed of storage media, such as ROM, RAM, hard discs, CD-ROM, and DVDs, or a combination of the storage media.

In the present disclosure, the UE controller 2220 may be defined as a circuit or an application-specific integrated circuit, or at least one processor. The processor may include a CP for performing control for communication and an AP for controlling upper layers such as application programs. The UE controller 2220 may control all operations of the UE according to an embodiment proposed in the present disclosure. For example, the UE controller 2220 may control a flow of signals between blocks so that the UE performs operations according to the above-described flowcharts. The storage 2230 may store at least one of information transmitted and received via the transceiver 2210 and information generated via the UE controller 2220.

When the methods are implemented in software, a computer-readable storage medium having one or more programs (software modules) stored therein may be provided. The one or more programs stored in the computer-readable storage medium is configured for execution by one or more processors within an electronic device. The one or more programs include instructions that cause the electronic device to execute the methods according to the embodiments described in the claims or specification of the present disclosure.

The programs (software modules or software) may be stored in RAM, non-volatile memory including a flash memory, ROM, electrically erasable programmable ROM (EEPROM), magnetic disc storage devices, CD-ROM, DVDs or other types of optical storage devices, and magnetic cassettes. Alternatively, the programs may be stored in a memory that is configured as a combination of some or all of the stated devices. A plurality of such devices may be included in the memory.

Furthermore, the programs may be stored in an attachable storage device that may be accessed through communication networks, such as the Internet, Intranet, a LAN, a WLAN, and a storage area network (SAN), or a communication network configured in a combination thereof. The storage device may connect to a device for performing a method according to an embodiment of the present disclosure via an external port. Furthermore, a separate storage device on a communication network may also connect to a device for performing a method according to an embodiment of the present disclosure.

In the specific embodiments of the present disclosure described above, a component included in the present disclosure is expressed in a singular or plural form depending on the presented specific embodiments. However, singular or plural expressions are selected to be suitable for the presented situations for convenience of descriptions, and the present disclosure is not limited to elements in a singular or plural form, i.e., an element expressed in a plural form may be configured as a single element, or an element expressed in a singular form may be configured as a plurality of elements.

Moreover, while specific embodiments have been described in the detailed description of the present disclosure, various modifications may be made therein without departing from the scope of the present disclosure. Thus, the scope of the present disclosure should not be limited to the described embodiments but be defined by the following claims as well as their equivalents.

## Claims

1. A method performed by a user equipment (UE) connected to a base station including at least one distributed unit (DU) in a wireless communication system, the method comprising:
obtaining uplink data; and
receiving downlink data from the base station or transmitting the uplink data to the base station via at least one cell corresponding to the at least one DU.

2. The method of claim 1, wherein
the at least one cell forms a cell group,
at least one cell corresponding to a first DU forms a first subcell group, and
at least one cell corresponding to a second DU forms a second subcell group.

3. The method of claim 1, wherein the receiving of the downlink data from the base station or the transmitting of the uplink data to the base station via the at least one cell corresponding to the at least one DU comprises, in response to receiving, from the base station, a configuration to perform transmission using an uplink split bearer via a radio resource control (RRC) reconfiguration message, transmitting the uplink data via a plurality of radio link control (RLC) entities corresponding to a plurality of DUs.

4. The method of claim 1, further comprising:
receiving a configured grant (CG) message corresponding to the at least one DU; and
transmitting a configured grant confirmation (CGC) message for the CG message by using uplink radio resources of a cell belonging to a corresponding subcell group.

5. The method of claim 1, further comprising, in case a radio link failure (RLF) occurs in a first cell of the at least one cell, transmitting, to the base station, a Failure Information message via a second cell included in a second subcell group that is different from a first subcell group including the first cell.

6. The method of claim 1, further comprising, based on a comparison between an amount of the uplink data and a preset threshold, determining at least one cell to be used for the transmitting of the uplink data.

7. The method of claim 1, further comprising transmitting, via a signaling radio bearer (SRB) corresponding to a first cell group, an uplink radio resource control (RRC) message to the first cell group, or transmitting, via the SRB corresponding to the first cell group, an RRC reconfiguration message to a second cell group in which a corresponding SRB is not configured.

8. A user equipment (UE) communicating with a base station including at least one distributed unit (DU) in a wireless communication system, the UE comprising:
a transceiver; and
a UE controller coupled to the transceiver and configured to obtain uplink data, and
via the transceiver, receive downlink data from the base station or transmit the uplink data to the base station by using at least one cell corresponding to the at least one DU included in the base station.

9. A method performed by a base station including at least one distributed unit (DU), connected to a user equipment (UE) in a wireless communication system, the method comprising:
obtaining downlink data; and
receiving uplink data from the UE or transmitting the downlink data to the UE via at least one cell corresponding to the at least one DU.

10. The method of claim 9, wherein
the at least one cell forms a cell group,
at least one cell corresponding to a first DU forms a first subcell group, and
at least one cell corresponding to a second DU forms a second subcell group.

11. The method of claim 9, wherein
the receiving of the uplink data from the UE or the transmitting of the downlink data to the UE via the at least one cell corresponding to the at least one DU comprises:
configuring, via a radio resource control (RRC) reconfiguration message, the UE to perform transmission using an uplink split bearer; and
receiving, from the UE, the uplink data via a plurality of radio link control (RLC) entities corresponding to a plurality of DUs.

12. The method of claim 9, further comprising:
transmitting, to the UE, a configured grant (CG) message corresponding to the at least one DU; and
receiving a configured grant confirmation (CGC) message for the CG message via uplink radio resources of a cell belonging to a corresponding subcell group.

13. The method of claim 9, further comprising, in case a radio link failure (RLF) occurs in a first cell of the at least one cell, receiving, from the UE, a Failure Information message via a second cell included in a second subcell group that is different from a first subcell group including the first cell.

14. The method of claim 9, further comprising, based on a comparison between an amount of the downlink data and a preset threshold, determining at least one cell to be used for the transmitting of the downlink data.

15. The method of claim 9, further comprising transmitting, via a preset signaling radio bearer (SRB), a downlink radio resource control (RRC) message to the UE, or transmitting an RRC reconfiguration message to another base station in which a SRB is configured.
